# EUROPEAN PATENT APPLICATION

(11) **EP 4 160 253 A1**
(43) Date of publication of application: **05.04.2023**
(21) Application number: 22197849.7
(22) Date of filing: 26.09.2022
(51) Int. Cl.: G01S 7/02, G01S 7/40, G01S 7/481, G01S 13/931, G01S 7/497, G01S 17/931, H01Q 1/32

(54) **VEHICLE-MOUNTED STRUCTURE, ELECTROMAGNETIC WAVE TRANSMISSION COVER UNIT, AND ELECTROMAGNETIC WAVE TRANSMISSION COVER**

(30) Priority: 29.09.2021 JP 2021159115
(71) Applicant: Toyoda Gosei Co., Ltd., Kiyosu-shi, Aichi 452-8564 (JP)
(72) Inventor: HIRANO, Risa, Kiyosu-shi, 452-8564 (JP); FUKAGAWA, Koji, Kiyosu-shi, 452-8564 (JP)
(74) Representative: Kramer Barske Schmidtchen Patentanwälte PartG mbB

(57) **Abstract**

A vehicle-mounted structure (101) includes: an exterior member (5) mounted on a vehicle; an electromagnetic wave transmission cover including a cover portion (2) attached to the exterior member and exposed to an outside of the vehicle, and a housing (4) integrated with the cover portion and arranged on a back surface side of the cover portion; and an electromagnetic wave device (8) located on the back surface side of the cover portion and accommodated in the housing. The cover portion has a mounting region (a) for mounting a functional member, a first joining region (b) to be joined to the housing, and a second joining region (c) to be joined to the exterior member. The first joining region and the second joining region are provided on an outer peripheral side of the mounting region avoiding the mounting region.

## Description

### BACKGROUND

### 1. Field of the Invention

The present invention relates to a vehicle-mounted structure mounted on a vehicle, an electromagnetic wave transmission cover unit, and an electromagnetic wave transmission cover.

### 2. Description of the Related Art

In recent years, the development of a driving assist system for a vehicle has been actively carried out, and various electromagnetic wave devices used for the driving system are attached to the vehicle.

A light detection and ranging (LiDAR), which is a kind of the above-described electromagnetic wave device, is a remote sensing technology using a light ray and is used in a driving assist system.

In the LiDAR, a laser is used to emit a light ray having a relatively short wavelength toward a target object, and the light ray reflected by the target object is detected. Among the LiDARs, those which perform sensing using near infrared rays are advantageous for detecting obstacles at a relatively short distance.

As other electromagnetic wave devices, electromagnetic wave radar devices such as millimeter wave radars and laser radars are also known. The electromagnetic wave radar device is used for an adaptive cruise control (ACC) of a vehicle.

The ACC is a technology which measures traveling information such as an inter-vehicle distance between a vehicle in front of an own vehicle and the own vehicle and a relative speed using a sensor mounted on a front side of the vehicle, and controls a throttle and a brake based on the traveling information to accelerate and decelerate the own vehicle to control the inter-vehicle distance. The ACC has been attracting attention as one of core technologies of Intelligent Transport Systems (ITS) aiming at alleviating traffic congestion and reducing accidents in recent years. A millimeter wave radar, which is a kind of electromagnetic wave radar device, transmits millimeter waves having a frequency of 30 GHz to 300 GHz and a wavelength of 1 mm to 10 mm, and receives the millimeter waves reflected by a target object. From a difference between the transmitted waves and the received waves, the inter-vehicle distance and the relative speed between the vehicle in front of the own vehicle and the own vehicle can be calculated.

An emitting portion and a detecting portion of the various electromagnetic wave devices described above are mounted on the outermost side (that is, a front end side, a side end side, a rear end side, and the like of the vehicle) of the vehicle. When the emitting portion and the detecting portion are visually recognized from an outside of the vehicle, the design of the vehicle is impaired. Therefore, it is common to provide an electromagnetic wave transmission cover to cover the emitting portion and the detecting portion further outside of the emitting portion and the detecting portion.

Specifically, the electromagnetic wave transmission cover has a cover portion. The cover portion is exposed to the outside of the vehicle and is arranged on an electromagnetic wave path of the electromagnetic wave device to allow transmission of the electromagnetic wave.

Here, various functional members are mounted on the cover portion. Since the cover portion is exposed to the outside of the vehicle, frost may form during cold weather and snow may accumulate during snowfall. When the cover portion is covered with frost and snow, a sensing function of the electromagnetic wave device located on a back side, that is, an inner side of the cover portion, a communication function of a communication device of the electromagnetic wave device, and the like may be impaired.

JP-A-2020-165943 introduces an invention relating to an electromagnetic wave transmission cover for covering an infrared sensor, which is a kind of the electromagnetic wave device. The electromagnetic wave transmission cover introduced in JP-A-2020-165943 is an infrared sensor cover 4, and includes a cover base material 5 provided on a path of infrared rays transmitted and received by an infrared sensor 3, and a heater wire 8 provided on a surface of the cover base material 5 and generating heat by energization. The cover base material 5 is considered to correspond to the above-described cover portion, and the heater wire 8 is considered to correspond to a functional member.

According to this type of electromagnetic wave transmission cover, the heater wire 8 which is the functional member generates heat to heat the cover portion, so that the frost and snow covering the cover portion can be melted. As a result, it is considered that obstruction of the sensing function and communication function of the electromagnetic wave device due to frost and snow can be suppressed.

As described above, in the electromagnetic wave transmission cover introduced in JP-A-2020-165943, the functional member is mounted on the cover portion.

The electromagnetic wave transmission cover has a housing which accommodates the electromagnetic wave device in addition to the cover portion. In addition, the electromagnetic wave transmission cover is attached to various exterior members mounted on the vehicle. More specifically, the electromagnetic wave transmission cover is attached to the exterior member such as a front grille, a bumper, or a rear garnish mounted on the vehicle by the cover portion.

Therefore, the cover portion of the electromagnetic wave transmission cover is provided with a portion (referred to as a first joining portion) to be joined to the housing and a portion (referred to as a second joining portion) to be joined to the exterior member.

When the cover portion is attached to the housing and the exterior member, an external force acts on the first joining portion and the second joining portion of the cover portion.

Here, as described above, the functional member is mounted on the cover portion. The above-described external force may also act on the functional member mounted on the cover portion. Then, in some cases, the external force may adversely affect the functional member, and a function of the functional member may be impaired.

### SUMMARY

The present invention is made in view of the circumstances described above, and an object of the present invention is to provide a technique capable of suitably maintaining the function of the functional member in the electromagnetic wave transmission cover mounted on the vehicle.

According to an aspect of the present invention, there is provided a vehicle-mounted structure including: an exterior member mounted on a vehicle; an electromagnetic wave transmission cover including a cover portion attached to the exterior member and exposed to an outside of the vehicle, and a housing integrated with the cover portion and arranged on a back surface side of the cover portion; and an electromagnetic wave device located on the back surface side of the cover portion and accommodated in the housing, where: the cover portion has a mounting region for mounting a functional member, a first joining region to be joined to the housing, and a second joining region to be joined to the exterior member; and the first joining region and the second joining region are provided on an outer peripheral side of the mounting region avoiding the mounting region

According to another aspect of the present invention, there is provided an electromagnetic wave transmission cover unit including: an electromagnetic wave transmission cover including a cover portion attached to an exterior member mounted on a vehicle and exposed to an outside of the vehicle, and a housing integrated with the cover portion and arranged on a back surface side of the cover portion; and an electromagnetic wave device arranged on the back surface side of the cover portion and accommodated in the housing, where: the cover portion has a mounting region for mounting a functional member, a first joining region to be joined to the housing, and a second joining region to be joined to the exterior member; and the first joining region and the second joining region are provided on an outer peripheral side of the mounting region avoiding the mounting region.

According to still another aspect of the present invention, there is provided an electromagnetic wave transmission cover including: a cover portion attached to an exterior member mounted on a vehicle and exposed to an outside of the vehicle; and a housing integrated with the cover portion and arranged on a back surface side of the cover portion, where: the cover portion has a mounting region for mounting a functional member, a first joining region to be joined to the housing, and a second joining region to be joined to the exterior member; and the first joining region and the second joining region are provided on an outer peripheral side of the mounting region avoiding the mounting region.

According to the vehicle-mounted structure, the electromagnetic wave transmission cover unit, and the electromagnetic wave transmission cover of the present invention, it is possible to suitably maintain the function of the functional member.

### BRIEF DESCRIPTION OF THE DRAWINGS

The present invention will become more fully understood from the detailed description given hereinbelow and the accompanying drawing which is given by way of illustration only, and thus is not limitative of the present invention and wherein:
Fig. 1 is an explanatory diagram schematically illustrating an electromagnetic wave transmission cover of a first example;
Fig. 2 is an explanatory diagram schematically illustrating a state in which the electromagnetic wave transmission cover of the first example is cut;
Fig. 3 is an explanatory diagram schematically illustrating a state in which an electromagnetic wave transmission cover of a second example is cut; and
Fig. 4 is an explanatory diagram schematically illustrating a state in which an electromagnetic wave transmission cover of a third example is cut.

### DETAILED DESCRIPTION OF THE INVENTION

Hereinafter, embodiments for carrying out the present invention will be described. Unless otherwise specified, a numerical range "a to b" described in the present specification includes a lower limit a and an upper limit b in the range. Then, the numerical range can be configured by freely combining these upper limit values and lower limit values, as well as the numerical values listed in examples. Further, a numerical value freely selected from within these numerical ranges can be used as a new upper limit or lower limit numerical value.

An electromagnetic wave transmission cover of the present invention includes a cover portion attached to an exterior member mounted on a vehicle and exposed to an outside of the vehicle, and a housing integrated with the cover portion and arranged on a back surface side of the cover portion.

The cover portion has a mounting region for mounting a functional member, a first joining region to be joined to the housing, and a second joining region to be joined to the exterior member. The first joining region and the second joining region are provided on an outer peripheral side of the mounting region, avoiding the mounting region.

That is, in the electromagnetic wave transmission cover of the present invention, the mounting region for mounting the functional member of the cover portion, similarly, the first joining region to be joined to the housing of the cover portion, and the second joining region to be joined to the exterior member of the cover portion are separated from each other in a radial inward-outward direction of the cover portion. In other words, the mounting region of the electromagnetic wave transmission cover of the present invention is not provided with the joining portion with the housing or the joining portion with the exterior member. As a result, according to the electromagnetic wave transmission cover of the present invention, it is difficult for an external force due to a joint between the cover portion and the housing and an external force due to a joint between the cover portion and the exterior member to act on the functional member mounted in the mounting region of the cover portion. As a result, according to the electromagnetic wave transmission cover of the present invention, it is possible to suppress an adverse effect of the external force on the functional member, and by extension, it is possible to suitably maintain a function of the functional member.

Similarly, for an electromagnetic wave transmission cover unit of the present invention provided with the electromagnetic wave transmission cover of the present invention, and a vehicle-mounted structure of the present invention, it is difficult for an external force due to the joint between the cover portion and the housing and an external force due to the joint between the cover portion and the exterior member to act on the functional member mounted in the mounting region of the cover portion. Therefore, similarly, for the electromagnetic wave transmission cover unit of the present invention and the vehicle-mounted structure of the present invention, it is possible to suppress the adverse effect of the above-described external force on the functional member, and by extension, it is possible to suitably maintain the function of the functional member.

Hereinafter, the vehicle-mounted structure, the electromagnetic wave transmission cover unit, and the electromagnetic wave transmission cover of the present invention will be described in detail for each component thereof.

The cover portion of the electromagnetic wave transmission cover of the present invention is arranged on a front side of an electromagnetic wave device and is exposed to the outside of the vehicle. It can be said that the cover portion is on an electromagnetic wave path of the electromagnetic wave device.

The electromagnetic wave device may have an emission portion for emitting an electromagnetic wave and/or a detection portion for receiving an electromagnetic wave, and is not particularly limited. A type of the electromagnetic wave is also not particularly limited.

Specific examples of the electromagnetic wave device include the above-described LiDAR, a radar device such as a millimeter-wave radar and a laser radar, a camera device such as a digital camera and an optical camera, and a foot sensor for opening and closing a door.

The electromagnetic wave may be any electromagnetic wave emitted and/or received by the various electromagnetic wave devices described above, and examples of the electromagnetic wave include infrared rays, millimeter waves, laser waves, and visible light rays having various wavelengths.

The cover portion of the electromagnetic wave transmission cover of the present invention may be made of any material as long as the cover portion can transmit the electromagnetic wave derived from the electromagnetic wave device, but a material capable of transmitting the electromagnetic wave may be selected.

Considering that the electromagnetic wave transmission cover of the present invention is mounted on the vehicle, it is preferable to select a resin such as polycarbonate (PC), acrylic resin, polypropylene (PP) as the material of the cover portion. The cover portion may have a one-layer structure, but may have a multi-layer structure in which a coat layer or the like is formed on a base layer.

A functional member is mounted on the cover portion. Examples of the functional member include, but are not limited to, heat generating elements such as heater wires, light emitting elements such as LEDs, liquid crystals, and organic EL, and various design layers. Further, the electromagnetic wave transmission cover of the present invention may have two or more functional members.

The design layer as the functional member may be any as long as the design layer can display various designs by painting, printing, metal vapor deposition, or the like, and a composition, a shape, and the like of the design layer are not particularly limited. The design layer may be mounted on a back surface of the cover portion, may be mounted on a front surface of the cover portion, or may be embedded in a central portion in a thickness direction of the cover portion. Further, the design layer may be covered with another layer such as a coat layer.

Similarly, an action mechanism and a shape of the heat generating element as the functional member are not particularly limited. The heat generating element may be mounted on the back surface of the cover portion, may be mounted on the front surface of the cover portion, or may be embedded in the central portion in the thickness direction of the cover portion. Further, the heat generating element may be covered with another layer such as a coat layer. The same applies to the light emitting element as the functional member.

The housing is a part of the electromagnetic wave transmission cover of the present invention, which is the part integrated with the cover portion and is arranged on a back side of the cover portion.

In the electromagnetic wave transmission cover of the present invention, the housing may have a shape capable of accommodating the electromagnetic wave device. As a specific shape of the housing, a box shape, a bottomed or bottomless cylinder shape, a frame shape, or the like can be exemplified.

A method of integrating the housing and the cover portion is not particularly limited. As a specific method for integrating the housing and the cover portion, engagement, fitting, screwing, welding, or adhesion can be exemplified.

The cover portion of the electromagnetic wave transmission cover of the present invention is attached to the exterior member mounted on the vehicle.

The exterior member may be any exterior member mounted on the vehicle, and examples of the exterior member include a front grille, a bumper, a rear garnish, and the like as described above.

A method of integrating the exterior member and the cover portion is also not particularly limited. As a specific method for integrating the exterior member and the cover portion, engagement, fitting, screwing, welding, or adhesion can be exemplified.

In the electromagnetic wave transmission cover of the present invention, the cover portion has the mounting region for mounting the functional member, the first joining region to be joined to the housing, and the second joining region to be joined to the exterior member. The first joining region and the second joining region are provided on the outer peripheral side of the mounting region, avoiding the mounting region.

In the electromagnetic wave transmission cover of the present invention, the first joining region and the second joining region may be provided on the outer peripheral side of the mounting region, avoiding the mounting region. The first joining region and the second joining region may be separated from each other in the radial inward-outward direction of the cover portion, or at least a part of the first joining region and the second joining region may overlap in the radial inward-outward direction of the cover portion.

Further, the first joining region and the second joining region may be provided over an entire circumference of the cover portion in a circumferential direction, or may be provided only in a part of the circumferential direction.

In either case, by providing the first joining region and the second joining region on the outer peripheral side of the mounting region avoiding the mounting region, the first joining region and the second joining region can be structurally separated from the mounting region. As a result, it is possible to suppress the external force generated in the first joining region when joining the cover portion and the housing or while maintaining the joint between the cover portion and the housing and the external force generated in the second joining region when joining the cover portion and the exterior member or while maintaining the joint between the cover portion and the exterior member from propagating to the functional member mounted in the mounting region of the cover portion.

In the electromagnetic wave transmission cover of the present invention, the first joining region, the second joining region, and the mounting region may be adjacent to each other in the radial inward-outward direction of the cover portion. However, in order to more effectively separate the first joining region, the second joining region, and the mounting region, it is effective to secure a certain distance between the first joining region and the mounting region and a distance between the second joining region and the mounting region in the radial inward-outward direction of the cover portion.

In particular, 5 mm or more, 7 mm or more, or 10 mm or more can be exemplified as a preferable range of the distance between the first joining region and the mounting region and the distance between the second joining region and the mounting region in the radial inward-outward direction of the cover portion.

In the electromagnetic wave transmission cover of the present invention, the first joining region, the second joining region, and the mounting region may be at the same position or at different positions in the thickness direction of the cover portion.

In order to more effectively separate the mounting region from the first joining region and the second joining region, in the thickness direction of the cover portion, the mounting region is preferably located at a position different from the first joining region or the second joining region, and is more preferably located at a position different from the first joining region and the second joining region.

In particular, since a relatively large external force may act on the second joining region to be joined to the exterior member, it is desirable that the mounting region is located at a position different from the second joining region. Specifically, it is preferable that the mounting region be on the back surface of the cover portion or the central portion in the thickness direction of the cover portion, and the second joining region protrude toward the back side of the cover portion.

By the way, the electromagnetic wave device is accommodated in the housing of the electromagnetic wave transmission cover of the present invention. The housing and the cover portion of the electromagnetic wave transmission cover of the present invention are joined and integrated in the first joining region of the cover portion.

Therefore, the electromagnetic wave transmission cover of the present invention is preferably treated as a state in which the electromagnetic wave device is accommodated in the housing and the housing and the cover portion are joined, that is, the electromagnetic wave transmission cover unit unitized with the electromagnetic wave device.

In this case, a handleability of the electromagnetic wave transmission cover unit is improved, and there is an advantage that a work of attaching the electromagnetic wave transmission cover unit to the exterior member is not complicated.

In order to simplify a shape of the electromagnetic wave transmission cover and to make the work of attaching the above-described electromagnetic wave transmission cover unit to the exterior member easier, in the electromagnetic wave transmission cover of the present invention, it is preferable to provide the second joining region to be joined to the exterior member on the outer peripheral side of the first joining region to be joined to the housing.

Hereinafter, the electromagnetic wave transmission cover of the present invention will be described with reference to specific examples.

### First Example

An electromagnetic wave transmission cover of a first example is provided with a LiDAR as an electromagnetic wave device, and is attached to a front grill of a vehicle as an exterior member. An electromagnetic wave transmission cover unit of the first example includes the electromagnetic wave device and the electromagnetic wave transmission cover of the first example, and a vehicle-mounted structure of the first example includes the electromagnetic wave transmission cover unit and the above-described exterior member.

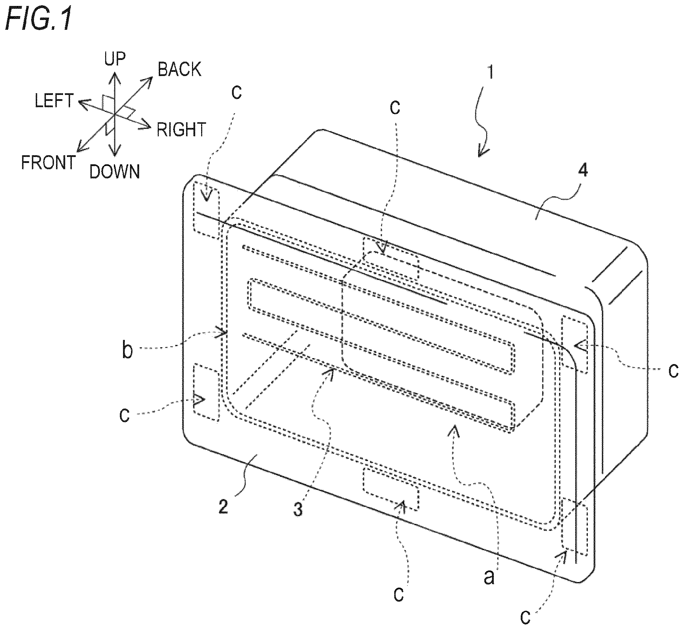

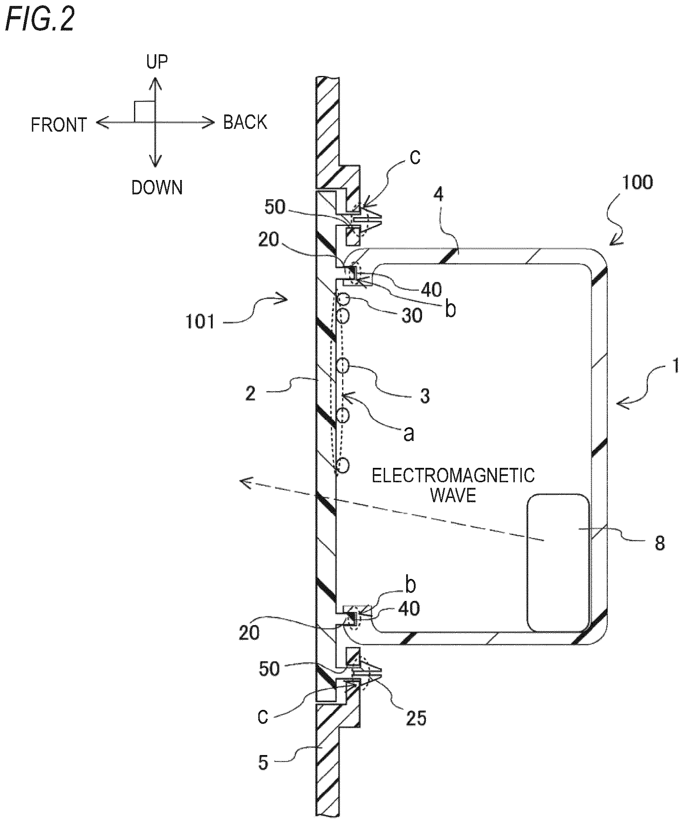

Fig. 1 is an explanatory diagram schematically illustrating the electromagnetic wave transmission cover of the first example. Fig. 2 is an explanatory diagram schematically illustrating a state in which the electromagnetic wave transmission cover of the first example is cut.

Hereinafter, the terms of front, back, up, down, left, and right mean the front, back, up, down, left, and right shown in each figure. For reference, a front side corresponds to a front side in a vehicle traveling direction, and a back side corresponds to a rear side in the vehicle traveling direction.

As illustrated in Fig. 1, an electromagnetic wave transmission cover 1 of the first example includes a cover portion 2, a heat generating element 3, and a housing 4.

The cover portion 2 is made of resin and has a substantially plate shape. The cover portion 2 has a base body (not illustrated) made of PC and a hard coat layer (not illustrated) formed on a surface thereof.

The heat generating element 3 as a functional member is mounted on the cover portion 2. Specifically, the heat generating element 3 is composed of a heater wire and is arranged on a back side portion of the cover portion 2.

The heat generating element 3 is partially embedded in the cover portion 2 by an insert molding method and is arranged in a substantially central portion of the cover portion 2. The heat generating element 3 is connected to a power source (not illustrated), and receives power from the power source to generate heat.

In the cover portion 2, a region where the heat generating element 3 is mounted is referred to as a mounting region a.

In the electromagnetic wave transmission cover 1 of the first example, an electric contact 30 of the heat generating element 3 is provided in the mounting region a as illustrated in Fig. 2.

On the back side of the cover portion 2, the housing 4 having a box shape and made of PP is arranged. The housing 4 has an opening facing the front side. An annular groove 40 extending in a circumferential direction of the opening is provided at a peripheral edge portion of the opening in the housing 4. The housing 4 is adhered to a first joining region b of the cover portion 2 while facing the annular groove 40 to the first joining region b which is a part of the cover portion 2 located further on the outer peripheral side than the mounting region a.

Specifically, as illustrated in Fig. 2, the cover portion 2 has a joint protrusion portion 20 protruding rearward further on the outer peripheral side than the mounting region a. The joint protrusion portion 20 enters the annular groove 40 of the housing 4, and is joined to the housing 4 further on the outer peripheral side of the cover portion 2 than the mounting region a and further on the rear side than the mounting region a. In the electromagnetic wave transmission cover 1 of the first example, a part of the joint protrusion portion 20, which is the part joined, that is, adhered to the housing 4 is referred to as the first joining region b. It can be said that the first joining region b is located radially further on an outer side than the mounting region a in the cover portion 2. It can be said that the first joining region b and the mounting region a are located at different positions in a front-rear direction, that is, in a thickness direction of the cover portion 2.

The cover portion 2 has engaging claw portions 25 arranged along a circumferential direction of the cover portion 2 and protruding rearward further on the outer peripheral side than the first joining region b. The engaging claw portion 25 is elastically deformable in a direction of compression. The engaging claw portion 25 enters an engaging hole 50 provided in an exterior member 5 while being elastically deformed, and then returns to an original shape of the engaging claw portion 25 by an elastic restoring force inside the engaging hole 50, in such a manner that the engaging claw portion 25 engages with a peripheral edge portion of the engaging hole 50.

In the electromagnetic wave transmission cover 1 of the first example, a part of the engaging claw portion 25 of the cover portion 2, which is the part joined, that is, engaged with the peripheral edge portion of the engaging hole 50 of the exterior member 5, is referred to as a second joining region c. It can be said that the second joining region c is located radially further on an outer side than the mounting region a and the first joining region b in the cover portion 2. It can be said that the second joining region c and the mounting region a are located at different positions in the front-rear direction, that is, in the thickness direction of the cover portion 2.

In the electromagnetic wave transmission cover 1 of the first example, a distance between the first joining region b and the mounting region a in a radial inward-outward direction of the cover portion 2 is 10 mm or more. A distance between the second joining region c and the mounting region a in the radial inward-outward direction of the cover portion 2 is also 10 mm or more.

A LiDAR as an electromagnetic wave device 8 is accommodated in the housing 4 of the electromagnetic wave transmission cover 1. The electromagnetic wave device 8 emits infrared rays as electromagnetic waves toward the front side, and also receives infrared rays incident from the front side.

The cover portion 2 is arranged on the front side of the electromagnetic wave device 8. Therefore, the cover portion 2 is on an electromagnetic wave path of the electromagnetic wave device 8. The cover portion 2 can transmit infrared rays as electromagnetic waves.

In the electromagnetic wave transmission cover 1 of the first example, the first joining region b and the second joining region c of the cover portion 2 are provided on an outer peripheral side of the mounting region a, avoiding the mounting region a. Therefore, according to the electromagnetic wave transmission cover 1 of the first example, it is difficult for an external force due to a joint between the cover portion 2 and the housing 4 or an external force due to a joint between the cover portion 2 and the exterior member 5 to act on the functional member (that is, heat generating element 3) mounted in the mounting region a of the cover portion 2.

In the electromagnetic wave transmission cover 1 of the first example, the first joining region b and the mounting region a are in different positions in the thickness direction of the cover portion 2, and the second joining region c and the mounting region a are also in different positions in the thickness direction of the cover portion 2. Also, by this, the external force due to the joint between the cover portion 2 and the housing 4 and the external force due to the joint between the cover portion 2 and the exterior member 5 are unlikely to act on the functional member mounted in the mounting region a of the cover portion 2.

As a result, according to the electromagnetic wave transmission cover 1 of the first example, it is possible to suppress an adverse effect of the external force on the functional member, and by extension, it is possible to suitably maintain a function of the functional member.

In the electromagnetic wave transmission cover 1 of the first example, the electric contact 30 of the functional member is also arranged in the mounting region a. Therefore, in the electromagnetic wave transmission cover 1 of the first example, an adverse effect of the above-described external force on the electric contact 30 can be suppressed. This is useful for suitably maintaining the function of the functional member.

In the electromagnetic wave transmission cover 1 of the first example, the second joining region c is provided on an outer peripheral side of the first joining region b. As illustrated in Fig. 2, when the second joining region c is provided on the outer peripheral side of the first joining region b, an electromagnetic wave transmission cover unit 100 in which the electromagnetic wave transmission cover 1 and the electromagnetic wave device 8 are unitized, can be attached to the exterior member 5 from the front side by one operation. Thereby, the electromagnetic wave transmission cover 1 and the electromagnetic wave transmission cover unit 100 of the first example can be easily attached to the exterior member 5. According to a vehicle-mounted structure 101 of the first example, a step of integrating the electromagnetic wave transmission cover unit 100 and the exterior member 5 can be easily performed at the time of manufacturing.

### Second Example

An electromagnetic wave transmission cover of a second example is substantially the same as the electromagnetic wave transmission cover of the first example except that the cover portion and the housing are joined by welding, and the electric contact of the heat generating element is provided on the outer peripheral side of the first joining region avoiding the first joining region and on an outer peripheral side of the second joining region avoiding the second joining region. Therefore, the electromagnetic wave transmission cover of the second example will be described below, focusing on differences from the electromagnetic wave transmission cover of the first example.

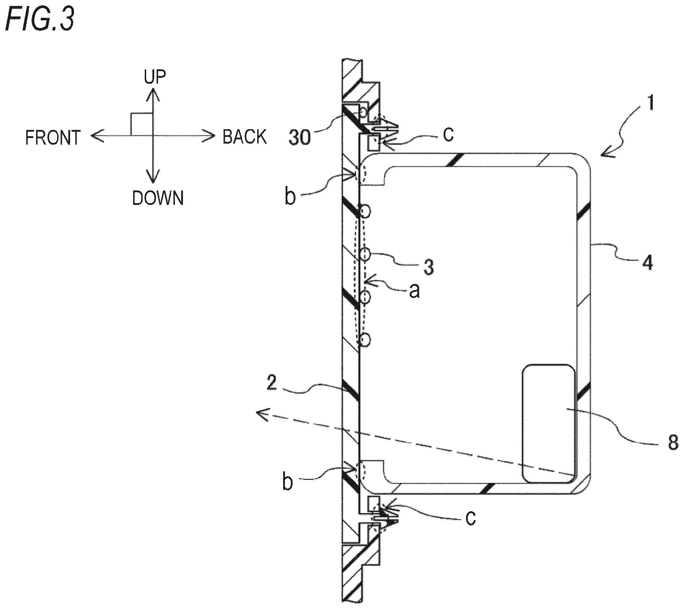

Fig. 3 is an explanatory diagram schematically illustrating a state in which the electromagnetic wave transmission cover of the second example is cut.

As illustrated in Fig. 3, in the electromagnetic wave transmission cover 1 of the second example, the cover portion 2 and the housing 4 are directly joined. Ultrasonic welding is adopted as a method of joining the cover portion 2 and the housing 4.

The electric contact 30 of the heat generating element 3 of the electromagnetic wave transmission cover 1 of the second example is arranged at an outermost edge portion of the cover portion 2. Therefore, the electric contact 30 is arranged on the outer peripheral side of the first joining region b avoiding the first joining region b and on an outer peripheral side of the second joining region c avoiding the second joining region c.

Also in the electromagnetic wave transmission cover 1 of the second example, the first joining region b and the second joining region c of the cover portion 2 are provided on the outer peripheral side of the mounting region a avoiding the mounting region a.

In the electromagnetic wave transmission cover 1 of the second example, although the first joining region b and the mounting region a are in the same position in the thickness direction of the cover portion 2, the second joining region c and the mounting region a are in different positions in the thickness direction of the cover portion 2.

Therefore, even in the electromagnetic wave transmission cover 1 of the second example, the external force due to the joint between the cover portion 2 and the housing 4 and the external force due to the joint between the cover portion 2 and the exterior member 5 are unlikely to act on the functional member mounted in the mounting region a of the cover portion 2.

Therefore, even in the electromagnetic wave transmission cover 1 of the second example, an adverse effect of the external force on the functional member can be suppressed, and a function of the functional member can be suitably maintained.

In the electromagnetic wave transmission cover 1 of the second example, unlike the electromagnetic wave transmission cover 1 of the first example, the electric contact 30 of the functional member is arranged on the outer peripheral side of the first joining region b avoiding the first joining region b and on the outer peripheral side of the second joining region c avoiding the second joining region c. However, also in the electromagnetic wave transmission cover 1 of the second example, the electric contact 30 is arranged at a position where the first joining region b and the second joining region c are avoided in the radial inward-outward direction of the cover portion 2. As a result, also in the electromagnetic wave transmission cover 1 of the second example, an adverse effect of the above-described external force on the electric contact 30 can be suppressed.

### Third Example

An electromagnetic wave transmission cover of a third example is substantially the same as the electromagnetic wave transmission cover of the second example except that a design layer is provided as a functional member instead of a heat generating element. Therefore, the electromagnetic wave transmission cover of the third example will be described below, focusing on differences from the electromagnetic wave transmission cover of the second example.

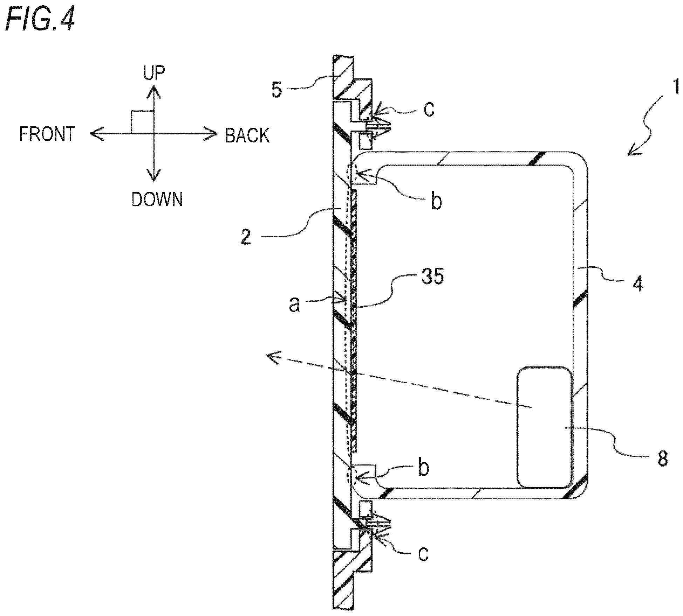

Fig. 4 is an explanatory diagram schematically illustrating a state in which the electromagnetic wave transmission cover of the third example is cut.

As illustrated in Fig. 4, in the electromagnetic wave transmission cover 1 of the third example, a design layer 35 as the functional member is mounted on a central portion of a back surface of the cover portion 2.

However, also in the electromagnetic wave transmission cover 1 of the third example, the first j oining region b and the second joining region c of the cover portion 2 are provided on the outer peripheral side of the mounting region a avoiding the mounting region a. The second joining region c and the mounting region a are located at different positions in the thickness direction of the cover portion 2.

Therefore, even in the electromagnetic wave transmission cover 1 of the third example, the external force due to the joint between the cover portion 2 and the housing 4 and the external force due to the joint between the cover portion 2 and the exterior member 5 are unlikely to act on the functional member (that is, design layer 35) mounted in the mounting region a of the cover portion 2.

Therefore, even in the electromagnetic wave transmission cover 1 of the third example, an adverse effect of the external force on the functional member can be suppressed, and a function of the functional member can be suitably maintained.

The present invention is not limited to the embodiments described above and illustrated in the drawings, and can be appropriately modified and implemented without departing from the gist. In addition, each component shown in the present specification including the embodiments can be freely extracted and combined.

## Claims

1. A vehicle-mounted structure comprising:
an exterior member mounted on a vehicle;
an electromagnetic wave transmission cover including a cover portion attached to the exterior member and exposed to an outside of the vehicle, and a housing integrated with the cover portion and arranged on a back surface side of the cover portion; and
an electromagnetic wave device located on the back surface side of the cover portion and accommodated in the housing, wherein:
the cover portion has a mounting region for mounting a functional member, a first joining region to be joined to the housing, and a second joining region to be joined to the exterior member; and
the first joining region and the second joining region are provided on an outer peripheral side of the mounting region avoiding the mounting region.

2. The vehicle-mounted structure according to claim 1, wherein:
the functional member has an element; and
an electric contact of the functional member is provided on the mounting region, an outer peripheral side of the first joining region avoiding the first joining region, or an outer peripheral side of the second joining region avoiding the second joining region.

3. The vehicle-mounted structure according to claim 1 or 2, wherein
the second joining region is provided on the outer peripheral side of the first joining region.

4. An electromagnetic wave transmission cover unit comprising:
an electromagnetic wave transmission cover including a cover portion attached to an exterior member mounted on a vehicle and exposed to an outside of the vehicle, and a housing integrated with the cover portion and arranged on a back surface side of the cover portion; and
an electromagnetic wave device arranged on the back surface side of the cover portion and accommodated in the housing, wherein:
the cover portion has a mounting region for mounting a functional member, a first joining region to be joined to the housing, and a second joining region to be joined to the exterior member; and
the first joining region and the second joining region are provided on an outer peripheral side of the mounting region avoiding the mounting region.

5. An electromagnetic wave transmission cover comprising:
a cover portion attached to an exterior member mounted on a vehicle and exposed to an outside of the vehicle; and
a housing integrated with the cover portion and arranged on a back surface side of the cover portion, wherein:
the cover portion has a mounting region for mounting a functional member, a first joining region to be joined to the housing, and a second joining region to be joined to the exterior member; and
the first joining region and the second joining region are provided on an outer peripheral side of the mounting region avoiding the mounting region.
